(19) Europäisches Patentamt / European Patent Office / Office européen des brevets

(11) **EP 1 712 940 B1**

(12) **FASCICULE DE BREVET EUROPEEN**

(45) Date de publication et mention
de la délivrance du brevet:
**21.07.2021   Bulletin 2021/29**

(51) Int Cl.:
***G02B 6/42*** *(2006.01)*       *F21V 8/00* *(2006.01)*
*G02B 27/09* *(2006.01)*

(21) Numéro de dépôt: **06290601.1**

(22) Date de dépôt: **13.04.2006**

(54) **Dispositif d'illumination homogène comportant une matrice de diodes laser**

Gleichmässige Beleuchtungsvorrichtung bestehend aus einer Matrix von Laserdioden

Uniform illumination apparatus comprising a matrix of laser diodes

(84) Etats contractants désignés:
**DE ES FR GB IT**

(30) Priorité:  **14.04.2005   FR 0503718**

(43) Date de publication de la demande:
**18.10.2006   Bulletin 2006/42**

(73) Titulaire: **Institut Franco-Allemand de Recherches
de
Saint-Louis
68301 Saint-Louis Cedex (FR)**

(72) Inventeur: **Lutz, Yves
68220 Hesingue (FR)**

(56) Documents cités:
**US-A- 3 918 814        US-A- 4 688 884
US-A- 5 307 430        US-A- 5 430 816
US-A- 6 112 004        US-A1- 2004 080 938
US-A1- 2004 190 584    US-B1- 6 272 269**

• **None**

EP 1 712 940 B1

**Description**

La présente invention concerne notamment le domaine des dispositifs utilisant l'émission stimulée et a plus particulièrement pour objet un illuminateur laser utilisant une matrice de diodes laser haute brillance.

L'utilisation d'illuminateurs laser est très répandue depuis la généralisation de l'emploi des lasers à semi-conducteurs. Parmi les domaines d'emploi on peut citer la vision de nuit où l'on utilise des illuminateurs lasers comme source d'éclairage artificiel à longue portée, typiquement de l'ordre de 1 à 10 km.

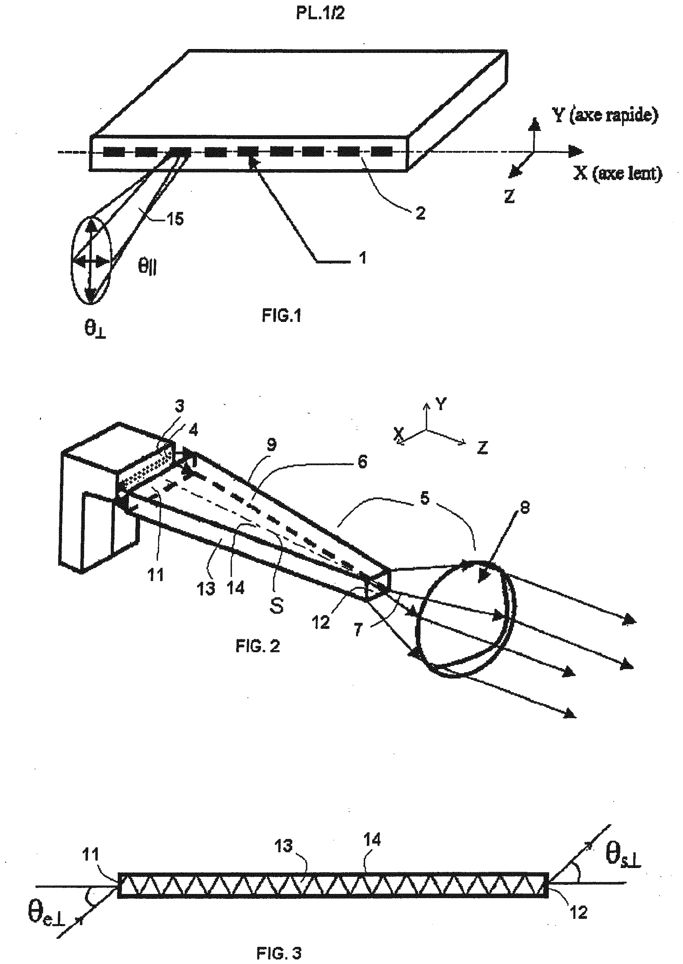

Pour enregistrer, en cas de très faible luminosité, par exemple de nuit, des images d'une scène contenant des objets en mouvement rapide et à de grandes distances, il est indispensable d'associer au dispositif de visualisation, généralement constitué par une optique et une caméra, une source d'éclairage spécifique. Les caractéristiques particulières de cette source sont : la directivité, la forte puissance de crête et la longueur d'onde centrée sur le maximum de sensibilité du détecteur utilisé. Le laser possède ces qualités et parmi les différents types de sources lasers, le laser à semi-conducteur ou diode laser paraît le mieux adapté de part ses excellentes propriétés en terme de rendement optique/électrique, de performances, de compacité et de coût. Le fait que ce type de source ne nécessite aucun réglage ni ajustement de cavité le rend particulièrement bien adapté à une utilisation en environnement extérieur supposant notamment des vibrations et des chocs. Pour pouvoir disposer d'une puissance d'illumination suffisante, on utilise des composants à émetteurs multiples disposés, comme montré sur la figure 1, en matrice 2 d'une ou deux dimensions sur la surface émettrice et où chaque émetteur est constitué par un laser. La puissance totale du composant est alors obtenue par addition de la puissance de chaque émetteur. Cependant, une source laser à semi-conducteur est caractérisée par des propriétés de faisceau très particulières. Un émetteur laser (1) possède une divergence de faisceau asymétrique selon deux directions perpendiculaires appelées axe rapide Y et axe lent X comme montré sur la figure 1. Plus généralement la divergence, pour une diode laser 1, est de l'ordre de 10° selon un axe parallèle à la jonction, l'axe X sur la figure 1, et de l'ordre de 40° selon un axe perpendiculaire à la jonction, à savoir l'axe Y.

Dans le cas des matrices de diodes laser, quelles soient à une ou à deux dimensions, chaque émetteur émet un faisceau unitaire de divergence asymétrique résultant en une enveloppe globale également asymétrique. De telles caractéristiques de faisceau ne sont pas compatibles avec des applications d'illumination de scènes où l'on cherche à obtenir une illumination homogène, dépourvue de points intenses et dont la divergence est contrôlée. De plus, pour obtenir un faisceau laser utilisable, c'est à dire de divergence réduite et symétrique selon les deux axes, il est nécessaire de collimater les faisceaux de la matrice.

Par ailleurs, si l'on veut disposer, par rapport à une matrice donnée de diodes laser, d'une puissance d'éclairage supérieure, on peut soit augmenter la taille de la matrice d'émetteurs soit augmenter la densité des émetteurs sur la surface émettrice.

La première voie possède un inconvénient majeur qui est l'augmentation excessive de la taille de la surface émettrice totale. Le composant perd ainsi sa propriété de compacité et de rigidité ; De plus, la brillance de la source est réduite, ce qui a une implication directe sur le dimensionnement des optiques de traitement du faisceau.

Une seconde voie consiste à augmenter la densité des émetteurs sur la matrice. De cette manière, on augmente la brillance de la source ainsi que la compacité du composant. De tels composants existent sur le marché sous le nom de matrice ou stack de haute brillance. On trouve, sur de tels composants, jusqu'à un millier d'émetteurs ou lasers sur une surface de 10 x 1,5 mm. Cette augmentation de densité a cependant deux inconvénients qui sont : un refroidissement plus délicat et une collimation plus difficile. Le refroidissement a une conséquence directe sur la puissance moyenne ou sur le taux de répétition qui sera plus réduit que dans le cas des matrices classiques. Une matrice de haute brillance permet tout de même de travailler avec de fortes puissances de crêtes et à une fréquence de répétition supérieure à la cadence vidéo (25Hz). Une densité d'émetteurs plus élevée a une influence sur la collimation des faisceaux. La distance entre les émetteurs d'une matrice classique permet d'associer à chaque émetteur sa propre micro-lentille ou micro-fibre. Dans le cas des matrices de haute brillance, la densité des émetteurs rend ces techniques de collimation inutilisables.

Le brevet US5825803 décrit l'utilisation de lentilles constituées de fibres à variation graduelle d'indice de réfraction, l'axe longitudinal de la fibre étant disposé perpendiculairement à la source lumineuse. De cette manière, on réalise la collimation d'une ligne d'émetteurs de la matrice. Un second dispositif de collimation doit encore être prévu pour traiter les colonnes de la matrice.

La fabrication d'une telle lentille est complexe et le moindre défaut de qualité ou d'alignement de cette dernière provoque un défaut de la collimation.

On connaît aussi la demande le brevet FR0212572 publié sous le numéro FR2845776 qui décrit un dispositif de collimation d'une matrice de haute brillance comportant une multitude de sources ponctuelles et caractérisé en ce qu'il comporte au moins une fibre optique dont la première extrémité est disposée à proximité et en regard des dites sources, l'ouverture numérique de ladite extrémité de cette fibre optique étant supérieure à l'ouverture numérique desdites sources. Toutefois, pour une matrice haute brillance de grande dimension, plusieurs fibres optiques sont nécessaires et, en sortie, on obtient plusieurs faisceaux qu'il va falloir recombiner unitairement pour conserver l'homogénéité de l'éclairage. On connaît le brevet US 4,688,884 qui décrit une technique de collimation de plusieurs émetteurs disposés sur une ligne et consistant en une seule fibre en verre dont l'extrémité est déformée et adaptée à la ligne d'émetteurs. La fibre est étirée dans le sens de la ligne et comprimée dans le sens perpendiculaire à la ligne. Le fait de déformer la fibre à l'entrée n'a de seul objectif que d'adapter géométriquement l'entrée de la fibre à la géométrie de la ligne afin d'optimiser le couplage de la lumière. Cette opération ne modifie pas l'aire des surfaces de la fibre. L'angle du faisceau de sortie est déterminé par l'ouverture numérique de la fibre et est identique dans les deux plans perpendiculaires. On passe ainsi d'un faisceau ayant des divergences différentes en sortie de ligne d'émetteur à un faisceau de divergences égales en sortie de fibre (supérieure ou égale à la plus forte divergence de la ligne) et on perd ainsi le bénéfice de la faible divergence selon l'axe de la ligne. Compte tenu de la section des aires d'entrée et de sortie de la fibre et des divergences résiduelles, on se trouve dans le cas défavorable de perte de brillance. Enfin, en sortie, la forme du faisceau à la forme du coeur de la fibre optique, à savoir, circulaire. Or, les dispositifs de visualisation utilisés avec les illuminateurs laser comportent un détecteur avec une géométrie rectangulaire ayant, la plupart du temps, un rapport largeur sur hauteur de 4/3 et, afin d'obtenir une efficacité de détection la plus élevée possible du système de vision de nuit, il est nécessaire d'avoir un faisceau d'illumination de la même forme ce qui n'est pas possible à la sortie d'une fibre optique à moins de la déformer. De plus l'angle de divergence du faisceau à la sortie de la fibre ne peut pas être choisi en fonction de paramètres géométriques mais seulement en fonction de l'ouverture numérique de la fibre donc des indices de réfraction de son coeur et de son enveloppe.

On connaît aussi Le brevet US6272269 qui décrit un système d'illumination dans le visible par fibre optique pouvant comporter une rangée de LED (Light Emitting Diode) ou des diodes lasers visibles aptes à émettre chacune un premier faisceau, une fibre optique, des moyens aptes collecter, concentrer et homogénéiser lesdits premiers faisceaux en un second faisceau unique et homogène et des moyens de couplages du second faisceau à la fibre optique.

Un tel système présente plusieurs inconvénients, à savoir :

- en sortie de la fibre optique, le faisceau ne peut avoir une forme rectangulaire à moins de la déformer,
- l'angle de divergence du faisceau à la sortie de la fibre ne peut pas être choisi en fonction de paramètres géométriques mais seulement en fonction de l'ouverture numérique de la fibre donc des indices de réfraction de son coeur et de son enveloppe.

On connaît par ailleurs le brevet US5307430 qui décrit des moyens aptes à collecter et à concentrer les premiers faisceaux émis par une matrice de diodes en un second faisceau unique destiné à pomper un cristal laser placé contre lesdits moyens. Ces derniers sont constitués par un guide de lumière de forme sensiblement prismatique et dont la section en regard de la matrice de diode est de forme convexe. Cette convexité permet d'accroître l'intensité du second faisceau mais augmente sa divergence ce qui diminue sa brillance. Toutefois, le cristal étant placé contre lesdits moyens, l'augmentation de l'angle de divergence n'a pas de conséquence sur l'utilisation de faisceau mais il en est tout autrement au sein d'un illuminateur laser.

Le but de l'invention est de proposer un illuminateur utilisant une matrice de diodes laser haute brillance qui soit très compact, simple aussi bien dans sa fabrication que dans sa mise en oeuvre et apte à traiter les faisceaux issus d'une matrice haute brillance dans deux axes simultanément, permettant l'obtention d'un faisceau unique parfaitement homogène correspondant à un faisceau d'illumination ayant une brillance accrue par rapport aux dispositifs existants et dont l'angle d'éclairage final peut être déterminé facilement de façon géométrique.

La solution apportée est un illuminateur laser à longue portée comportant une matrice d'émetteurs haute brillance dans l'infrarouge aptes à émettre chacun un premier faisceau, des moyens aptes à traiter les premiers faisceaux issus des émetteurs disposés en regard et à proximité de la matrice et aptes à assembler lesdits premiers faisceaux en un second faisceau unique et homogène, caractérisé en ce que lesdits moyens sont constitués par un prisme comportant une face plane d'entrée disposée en regard de la dite matrice d'émetteurs et une face plane de sortie, cette dernière étant disposée en regard de moyens de collimation, par exemple une lentille de collimation. Dans la suite du texte, ce prisme sera aussi appelé conduit de lumière.

Par proximité, il faut entendre une distance comprise par exemple entre 0,05 et 1 mm et ladite matrice peut-être de forme quelconque comme, par exemple, carrée ou rectangulaire ...

Selon une caractéristique additionnelle, le rapport de la largeur sur la hauteur de la face plane de sortie du prisme est proche de 4/3, à savoir compris entre 1,2 et 1,5.

Selon une caractéristique particulière, lesdits moyens aptes à traiter les premiers faisceaux comportent un axe de symétrie et sont délimités par une première surface disposée en regard et à proximité de la matrice, une seconde surface par laquelle sort le second faisceau et quatre surfaces latérales reliant lesdites première et seconde surfaces, et deux des surfaces latérales font, avec l'axe de symétrie, un angle α inférieur à 15°.

Selon une caractéristique additionnelle, les faisceaux issus des émetteurs sont divergents selon deux axes X et Y, appelés respectivement axe lent et axe rapide, ces axes étant perpendiculaires aux axes desdits faisceaux, et les surfaces latérales aptes à réfléchir les faisceaux selon l'axe lent font, avec un axe Z perpendiculaire aux axes rapide et lent, un angle α tel que, sur toute la longueur du prisme, l'angle d'incidence des premiers faisceaux, selon l'axe lent par rapport à la normale aux dites surfaces latérales, est supérieur à l'angle limite de réflexion totale.

Selon une caractéristique particulière, les émetteurs de la matrice sont constitués par des diodes laser.

Selon une caractéristique additionnelle, le prisme est en verre ou en plexiglas.

Selon une autre caractéristique le prisme est creux et ses faces sont réfléchissantes.

Selon une autre caractéristique ladite première surface est recouverte d'un revêtement antireflet.

D'autres avantages et caractéristiques apparaîtront dans la description d'un mode particulier de réalisation de l'invention et au regard des figures annexées parmi lesquelles :

- la figure 1 présente une matrice de diodes haute brillance à une dimension.
- la figure 2 montre un schéma d'un illuminateur laser selon un mode particulier de réalisation de l'invention.
- la figure 3 illustre la propagation des premiers faisceaux issus de la matrice haute brillance suivant la direction de grande divergence, c'est-à-dire selon l'axe rapide.
- les figures 4a et 4b montrent deux exemples de propagation des faisceaux issus de la matrice haute brillance suivant la direction de faible divergence, c'est-à-dire selon l'axe lent.

La figure 2 montre un illuminateur laser selon l'invention. Il comporte une matrice 3, à deux dimensions, d'émetteurs laser 4 haute brillance, chaque émetteur émettant un premier faisceau 15, des moyens 5 aptes à traiter les premiers faisceaux issus des émetteurs laser et à les collimater, ces moyens 5 comportant des premiers moyens 6 disposés en regard et à proximité de la matrice 3 et aptes à assembler lesdits premiers faisceaux 15 en un second faisceau 7 unique et homogène et à mettre en forme ce dernier. Les moyens 5 de traitement des premiers faisceaux 15 comportent, en outre, des seconds moyens 8 aptes à collimater ce second faisceau 7. La forme de la surface de sortie des premiers moyens 6 aptes à assembler lesdits premiers faisceaux 15 en un second faisceau 7 unique est préférentiellement optimisée pour permettre aux seconds moyens 8, aptes à collimater ce second faisceau 7, de produire une parfaite superposition entre la zone éclairée par l'illuminateur et le champ de vue du système d'imagerie associé à l'illuminateur.

La matrice 3 est composée de 900 sources émettrices laser 4, telles par exemple des diodes laser. Les dimensions de la surface globale d'émission sont de 1,4 x 9,6 mm. Cette surface émettrice peut être considérée comme un point source et présente une divergence de 10° selon un axe parallèle à la jonction, à savoir l'axe X, et communément appelé axe lent, et une divergence de 40° selon un axe perpendiculaire à la jonction, à savoir l'axe Y, cet axe étant communément appelé axe rapide. L'enveloppe du faisceau issue de cette surface émettrice est constituée de la somme des faisceaux unitaires 15 de chaque émetteur.

Les premiers moyens 6 disposés en regard et à proximité de la matrice 4 et aptes à homogénéiser et à formater lesdits premiers faisceaux en un second faisceau 7 unique et homogène sont constitués par un conduit de lumière 9 réalisé en un matériau transparent à la longueur d'onde d'émission des diodes 4, comme par exemple du verre ou du plexiglas. Ce conduit à la forme d'un prisme plein délimité par :

- une première surface 11 plane disposée en regard de la matrice et par laquelle entrent les faisceaux issus des différentes diodes 4 de la matrice 3. Ses dimensions sont égales à celles de la surface émettrice de la matrice de diodes laser majorée d'une surépaisseur permettant de coupler tous les rayons de la matrice de diodes 4 dans le conduit de lumière 9.
- une seconde surface 12 de section plus petite que la première surface et par laquelle sort un faisceau 7 unique et homogène,
- des surfaces latérales planes reliant la première surface 11 à la seconde 12, à savoir deux surfaces latérales 13 de section rectangulaire et disposées selon l'axe rapide Y et deux surfaces latérales 14 de section trapézoïdale et disposées selon l'axe lent X. Chacune des arêtes, formées par la jonction de deux surfaces latérales adjacentes 13 et 14, fait, avec l'axe Z perpendiculaire aux axes X et Y, un angle α.

A la sortie du conduit de lumière 9 sont disposés les seconds moyens 8 aptes à collimater le faisceau 7 constitués par une lentille de collimation 8 qui permet de projeter l'image de la surface de sortie du conduit sur la scène à éclairer.

La forme géométrique du second faisceau 7 est déterminée par la forme de la surface de sortie 12 du conduit de lumière 9. Ce dernier permet donc de mettre en forme le second faisceau 7. Préférentiellement, cette forme est adaptée à la forme du capteur d'image utilisé en association avec l'illuminateur laser. Dans un système classique utilisant une caméra CCD, le rapport entre la largeur et la hauteur du détecteur est de 4/3. Aussi, pour optimiser l'éclairage, il est préférable d'utiliser la même valeur de rapport largeur sur hauteur pour la surface de sortie 12 du conduit de lumière 9. Une fois ce rapport fixé, il reste à déterminer la valeur de l'un des cotés de la surface de sortie afin d'en déduire l'autre.

Si l'on utilise une lame à faces parallèles et que l'on analyse la propagation des rayons des premiers faisceaux selon la direction correspondant à la plus grande divergence (40°), on voit, comme montré sur la figure 3, que tous les rayons, sauf ceux correspondants aux pertes par réflexion sur la surface d'entrée 11, sont couplés dans le conduit 9 et se propagent selon la loi de la réflexion totale. L'angle de sortie du faisceau selon cette direction est égal à l'angle d'injection $\theta e\perp = \theta s\perp$.

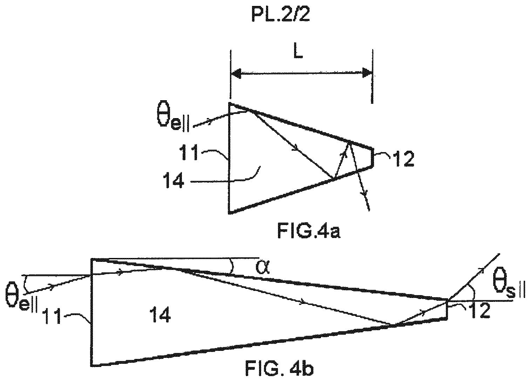

Les figures 4a et 4b montrent la propagation des rayons des premiers faisceaux selon la direction correspondant à la plus faible divergence (10°) dans le conduit de lumière 9. On voit, sur la figure 4a, que lors de la propagation, l'angle d'incidence des rayons par rapport à la normale à la surface latérale diminue jusqu'à être inférieur à l'angle limite de réflexion totale. A partir de là, les rayons sortent du conduit de lumière 9 par ses faces latérales 13 et non pas par la seconde surface 12, générant ainsi des pertes incompatibles avec l'obtention d'un bon rendement énergétique. Ce cas de figure se produit lorsque l'angle a, précédemment défini, est trop grand. La largeur de la surface 11 d'entrée du conduit 9 étant fixée par la largeur de la matrice 3, l'angle $\alpha$ est lié à la fois à la dimension de sortie h et à la longueur L du conduit ; c'est donc ces deux paramètres qui doivent être optimisés pour obtenir le meilleur rendement possible en évitant lesdites pertes.

Par ailleurs, la compacité de l'ensemble de illuminateur laser est liée à sa brillance B [W m$^{-2}$sr$^{-1}$] donnée par la relation :

$$B = P/(A\Omega)$$

Où P représente la puissance émise par le faisceau de section A à la sortie de l'illuminateur laser et $\Omega$ représente l'angle solide de divergence du faisceau. La brillance globale de l'illuminateur laser ne peut en aucun cas être supérieure à la brillance du composant de base qui est la matrice de diodes. Les éléments optiques 8 et 9 placés sur le trajet du faisceau ne peuvent, s'ils sont parfaits, que conserver la brillance de la source laser de départ. Le conduit de lumière est dit « parfait » s'il reproduit en sortie la brillance en entrée. Si le conduit n'absorbe pas de puissance ou ne présente pas de rayons perdus comme illustré sur la figure 4a, la puissance en sortie est identique à celle en entrée. C'est donc le produit de l'aire A du faisceau de sortie de l'illuminateur par l'angle solide $\Omega$ de divergence du même faisceau qui est à optimiser.

L'angle $\Omega$ de divergence de l'illuminateur laser est généralement fixé par l'application et l'on cherche à éclairer une scène d'une dimension donnée à une distance donnée. La valeur de la focale f de la lentille de reprise 8 est déduite de la relation suivante valable en première approximation :

$$f_O = f/\Phi$$

avec $\omega$ : dimension, selon la direction donnée, du faisceau en sortie de conduit,
$\delta$ : angle de divergence du faisceau ramené dans un plan. Comme l'illuminateur n'est pas axisymétrique, il est nécessaire de faire le raisonnement suivant les deux axes perpendiculaires.

On voit à partir de cette relation que plus $\omega$ est grand, plus la focale f de la lentille 8 est grande. Le nombre d'ouverture $f_O$ de la lentille est fixé par l'angle $\theta$ du faisceau 7 en sortie du conduit 9.

$$f_O = f/\Phi$$

f : focale de la lentille
$\Phi$ : pupille d'entrée de la lentille
Plus l'angle $\theta$ du faisceau en sortie du conduit 9 est important, plus la pupille de la lentille 8 doit être grande pour éviter les pertes.

Un exemple d'illuminateur laser de divergence 1,5 x 2° est présenté ci-dessous. La matrice de diodes laser a une puissance crête de 1 kW dans le proche Infra-Rouge, une dimension de surface émettrice de 9,6 x 1,4 mm pour une divergence respective de $\theta el\ l=10°$ et $\theta e\perp=40°$. Le conduit de lumière utilisé est en verre BK7 poli sur toutes les faces sans dépôt diélectrique. Les dimensions de la surface d'entrée sont de 2 x 10 mm, les dimensions de la surface de sortie de 2,66 x 2 mm ce qui correspondant à un rapport 4/3. La longueur totale du conduit est de L=100 mm. L'angle du faisceau 7 en sortie de conduit est de $\theta e\perp$ =40° et $\theta s\parallel$ =62°. La lentille de collimation utilisée a une focale $f$= 75 mm et un nombre d'ouverture $f_O$ = 0,86.

Le rendement de cet illuminateur laser, calculé comme le rapport entre la puissance incidente sur la cible à éclairer sur la puissance d'émission de la matrice 3 de diodes 4, est égal à $\eta$=63,7 %. Ce chiffre correspond à une bonne valeur en terme de traitement des faisceaux de lasers à semi-conducteurs. En utilisant des traitements antireflets sur les faces d'entrée et de sortie du conduit de lumière, les performances peuvent encore être augmentées.

La fabrication de ce type d'illuminateur laser est simple et peu coûteuse, les réglages sont limités et ne nécessitent pas de très grande précision.

Cet illuminateur laser a été associé à un système d'imagerie constitué d'une caméra CCD ayant un rapport longueur sur largeur de 4/3 ainsi que d'un objectif de focale variable. Cet exemple d'application montre qu'un illuminateur selon l'invention est particulièrement bien adapté pour des applications d'éclairage de scènes. De plus, il possède un bon rendement énergétique ainsi qu'une très bonne qualité de faisceau.

De nombreuses modifications peuvent être apportées à l'exemple de réalisation décrit sans sortir du cadre de l'invention. Ainsi, la matrice peut comporter des diodes différentes aptes à émettre à des longueurs d'onde différentes. Ensuite le conduit de lumière peut être creux et comporter des surfaces internes réfléchissantes ou un revêtement réfléchissant aux longueurs d'onde des émetteurs sur ses surfaces internes ou externes. De plus, les première et seconde surfaces latérales peuvent

faire un angle $\alpha$ avec l'axe de symétrie S du prisme comme dans l'exemple susmentionné, et les troisième et quatrième, un angle $\beta$ avec l'axe de symétrie S, cet angle $\beta$ étant préférablement inférieur à 10°.

## Revendications

1. Illuminateur laser à longue portée comportant une matrice (3) d'émetteurs haute brillance (4) dans l'infrarouge aptes à émettre chacun un premier faisceau (15), des moyens (6) aptes à traiter les premiers faisceaux issus des émetteurs (4) disposés en regard et à proximité de la matrice (3) et aptes à assembler lesdits premiers faisceaux en un second faisceau unique et homogène (7), lesdits moyens (6) étant constitués par un prisme (9) en matériau plein et transparent et comportant une première surface (11) plane disposée en regard de la matrice (3), la première surface (11) ayant des dimensions égales à celles de la surface émettrice de la matrice (3) majorée d'une surépaisseur permettant de coupler tous les rayons de la matrice (3) dans le prisme (9), une seconde surface (12) disposée en regard d'une lentille de collimation (8), de section plus petite que la première surface (11) et par laquelle sort le second faisceau (7), des surfaces latérales planes, à savoir deux surfaces latérales (13) de section rectangulaire et disposées selon l'axe rapide Y et deux surfaces latérales (14) de section trapézoïdale et disposées selon l'axe lent X, les axes X et Y étant perpendiculaires aux axes des faisceaux, chacune des arêtes, formées par la jonction de deux surfaces latérales adjacentes (13) et (14) faisant un angle $\alpha$ avec l'axe Z perpendiculaire aux axes X et Y inférieur à 15°, tel que, sur toute la longueur du prisme (9), l'angle d'incidence des premiers faisceaux, selon l'axe lent par rapport à la normale aux dites surfaces latérales (13), est supérieur à l'angle limite de réflexion totale

2. Illuminateur selon la revendication 1, **caractérisé en ce que** les émetteurs (4) de la matrice (3) sont constitués par des diodes laser.

3. Illuminateur selon l'une quelconque des revendications 1 à 2, **caractérisé en ce que** lesdits moyens (6) aptes à traiter les premiers faisceaux sont en verre ou en plexiglas.

4. Illuminateur selon l'une quelconque des revendications 1 à 3, **caractérisé en ce que** ladite première surface (11) est recouverte d'un revêtement antireflet.

5. Illuminateur selon l'une quelconque des revendications 1 à 4, **caractérisé en ce que** le rapport de la largueur sur la hauteur de la face plane de sortie du prisme et proche de 4/3, à savoir compris entre 1,2 et 1,5.

## Patentansprüche

1. Laserbeleuchter von großer Reichweite, in dem eine Matrix (3) aus hochbrillanten Emittern (4) im Infrarot enthalten ist, wobei jeder einzelne Emitter in der Lage ist, einen ersten Strahl (15) zu emittieren, sowie Mittel (6), mit welchen die ersten von den Emittern (4) emittierten Strahlen beeinflusst werden können, wobei die Emitter gegenüber und in der Nähe der Matrix (3) angebracht sind und in der Lage sind, diese ersten Strahlen zu einem einzigen zweiten und homogenen Strahl (7) zu bündeln, wobei diese Mittel (6) aus einem Prisma (9) aus transparentem Vollmaterial bestehen und über eine erste ebene Grenzfläche (11) verfügen, die sich gegenüber der Matrix (3) befindet, wobei die erste Oberfläche (11) die gleichen Abmessungen hat wie die emittierende Oberfläche der Matrix (3) mit einer zusätzlichen Überdicke, welche die Einkopplung aller Strahlen der Matrix (3) in das Prisma (9) ermöglicht; ein zweite Grenzfläche (12) befindet sich gegenüber einer Kollimationslinse mit einem kleineren Querschnitt als die erste Oberfläche (11) und aus welcher der zweite Strahl (7) austritt, wobei die beiden Seitenflächen eben sind, das heißt, dass zwei Seitenflächen (13) mit rechteckigem Querschnitt in der schnellen y-Achse angebracht sind und dass zwei Seitenflächen mit trapezförmigem Schnitt in der langsamen X-Achse angebracht sind, wobei die X-Achse und die Y-Achse senkrecht zu den Strahlachsen stehen und jede der Kanten, die sich aus der Stoßfläche der beiden nebeneinanderliegenden Seitenflächen (13) und (14) ergibt, einen Winkel $\alpha$ von weniger als 15° zur Z-Achse bildet, die senkrecht zu der X-Achse und der Y-Achse steht, sodass auf der gesamten Länge des Prismas (9) der Einfallswinkel der ersten Strahlen, je nach langsamer Achse im Verhältnis zur Normalen gegenüber den besagten Seitenflächen (13), größer als der Grenzwinkel der Totalreflexion ist.

2. Der Beleuchter gemäß Patentanspruch 1 zeichnet sich dadurch aus, dass die Emitter (4) der Matrix (3) aus Laserdioden bestehen.

3. Der Beleuchter gemäß einer der beiden Patentansprüche 1 bis 2 ist **dadurch gekennzeichnet, dass** die besagten Mittel (6), welche in der Lage sind, die ersten Laserstrahlen zu beeinflussen, aus Glas oder Plexiglas bestehen.

4. Der Beleuchter gemäß einer der Patentansprüche 1 bis 3 ist **dadurch gekennzeichnet, dass** die besagte erste Oberfläche (11) mit einer Antireflexionsschicht überzogen ist.

**5.** Der Beleuchter gemäß einer der Patentansprüche 1 bis 4 ist **dadurch gekennzeichnet, dass** das Verhältnis der Breite zur Höhe der ebenen Kopffläche am Prismenaustritt nahe bei 4:3, also zwischen 1,2 und 1,5, liegt.

**Claims**

**1.** Long range laser illuminator comprising a matrix (3) of infrared emitters with high brightness (4) each one able to emit a first beam (15), means (6) able to convert the first beams produced by the emitters (4) placed in front and near the matrix (3) and able to merge these first laser beams into a second unique and homogeneous beam (7), these means (6) consisting of a prism (9) made of solid transparent material and comprising a first plane surface (11) placed in front of the matrix (3), the first surface (11) having the same dimensions as the emitting surface of the matrix (3) augmented by an excess thickness to couple all beams of the matrix (3) into the prism (9); a second surface (12) placed in front of a collimator lens (8) of smaller section than the first surface (11) and from where the second beam is emitted (7), plane lateral surfaces, namely two lateral surfaces (13) of rectangular section and placed along the rapid axis Y and two lateral surfaces (14) of trapezoidal section and placed on the slow axis X; the X and the Y-axis being perpendicular to the beam axes, each of the edges formed by the junction of two adjacent lateral surfaces (13) and (14) forming an angle $\alpha$ with the Z axis measuring less than 15°, perpendicular to axis x and axis y so that over the entire length of the prism (9), the angle of incidence of the first beams, depending on the slow axis compared to the normal of said lateral surfaces (13), is superior to the critical angle of total reflection.

**2.** Illuminator according to claim 1, **characterized by** the fact that the emitters (4) of the matrix (3) consist of laser diodes.

**3.** Illuminator according to one of claims 1 to 2, **characterized by** the fact that the said means (6) able to shape the first beams are made of glass or plexiglass.

**4.** Illuminator according to one of claims 1 to 3, **characterized by** the fact that said first surface (11) is covered by an anti-reflective coating.

**5.** Illuminator according to one of claims 1 to 4, **characterized by** the fact that the width-to-height ratio of the plane output face of the prism is close to 4:3, that means between 1,2 and 1,5.

**FIG.1**

**FIG. 2**

**FIG. 3**

PL.2/2

$\theta_{e\|}$

11

14

$\theta_{e\|}$

L

12

FIG.4a

$\alpha$

14

$\theta_{s\|}$

12

11

FIG. 4b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5825803 A
- FR 0212572
- FR 2845776
- US 4688884 A
- US 6272269 B
- US 5307430 A